# EUROPEAN PATENT APPLICATION

(11) **EP 4 545 416 A1**
(43) Date of publication of application: **30.04.2025**
(21) Application number: 23205755.4
(22) Date of filing: 25.10.2023
(51) Int. Cl.: B64D 27/34, B64D 27/35, B64D 31/16, F16B 2/06, B64C 11/00, B64C 29/00

(54) **ELECTRICALLY DRIVEN PROPULSION UNIT OF AN AERIAL VEHICLE, AND AERIAL VEHICLE COMPRISING AN ELECTRICALLY DRIVEN PROPULSION UNIT**

(71) Applicant: Lilium eAircraft GmbH, 82234 Wessling (DE)
(72) Inventor: SWEIDEN, Hamish, 82234 Wessling (DE); VERMEIREN, Sebastien, 80997 München (DE)
(74) Representative: Grünecker Patent- und Rechtsanwälte PartG mbB

(57) **Abstract**

An electrically driven propulsion unit (4, 6) of an aerial vehicle (1) comprises: an attachment structure (7); and at least one attaching object (8) to be attached to the attachment structure (7) at a first side (A) thereof, the at least one attaching object (8) being an electric or electronic component. In order to attach the electric and/or electronic component the propulsion unit (4, 6) further comprises at least one attaching device (9) comprising an elastic element (10) which attaches the attaching object (8) by means of an elastic restoring force to the attachment structure (7).

## Description

The present invention relates to an electrically driven propulsion unit of an aerial vehicle and an aerial vehicle comprising the electrically driven propulsion unit.

In the prior art, for example, in US 2022 266 987 A1, there is known an electrically driven propulsion unit in which several electric and electronic components are installed. In particular, a controller is integrated in a stator part of the electrically driven propulsion unit. In other words, the controller comprising the electric and electronic components is an attaching object, while the stator part is an attachment structure.

It has been devised to attach the attaching object to the attachment structure by means of screws which are screwed into the attachment structure.

However, such attachment has certain shortcomings. That is, the attachment structure needs to be rather thick, to accommodate the screw in a threaded hole. This in turn may impair the cooling efficiency of the electric and electronic components. It may also occur that the screw penetrates the attachment structure and affects a propulsion air flow provided at a radially outer side of the stator part.

It is therefore an object of the present invention to provide an electrically driven propulsion unit in which an electric and/or electronic component can be attached in a more efficient manner.

This object is achieved by an electrically driven propulsion unit having the features of claim 1.

According to a first aspect, an electrically driven propulsion unit of an aerial vehicle is provided which comprises: an attachment structure; and at least one attaching object to be attached to the attachment structure at a first side thereof, the at least one attaching object being an electric or electronic component.

Particularly differing from the prior art, the present invention is characterized by further comprising at least one attaching device comprising an elastic element which attaches the attaching object by means of an elastic restoring force to the attachment structure.

According thereto, the attachment force can be provided by deformation of the elastic element. That is, there is no need for a complicate design such as providing a threaded hole in the attachment structure in order to establish the attachment force. Consequently, the attachment structure can be made thin and designed in view of other requirements such as cooling requirements. Furthermore, the attaching object can be easily replaced as only the elastic element needs to be deformed for replacement.

In this regard, it is to be noted that the elastic restoring force is preferably caused by the geometries of the attachment structure, the elastic element, and the attaching object only. The elastic element can press the attaching object against the attachment structure due to its elastic deformation only. That means that the elastic restoring force does not require any particular action of a user such as fastening a screw.

In the present disclosure, the electric component particularly refers to components used to supply and/or distribute and/or transform electric energy such as a battery, a cable and/or an electric motor. Electronic components additionally have a control function enabling the modification of electric energy such as a transistor or a relay. Preferably, the attaching object is a power module in which various electric and/or electronic components are integrated. The power module is functionally interposed between the power source such as a battery and the consumer such as an electric motor. Power modules are characterized by interacting with other power modules to fulfil a certain specification.

It is preferable that the elastic element/attaching device is installed to the attachment structure prior to attaching the attaching object. That is, the elastic element can be configured to provide the elastic restoring force in a state of being attached to the attachment structure.

Preferably, the elastic element is at least partially stretched to apply the restoring force.

Thus, in its natural state, the elastic element can be at least partially shortened with respect to the deformed state. Thereby, the installation space can be maintained small. In particular, the elastic element may be bent to apply the elastic restoring force.

Alternatively or additionally, the elastic element may substantially extend in a direction intersecting with the direction along which the elastic restoring force acts.

Thereby, the installation space can further be reduced.

According to a further aspect, an elastic restoring force may be applied to the attaching object at two different locations, preferably at two opposite end portions of the attaching object.

Thus, the static support on the attachment structure can be increased, and, thus, the attachment can be performed more reliably. In this regard, the respective elastic restoring force may be applied by the same elastic element or by different elastic elements.

Preferably, at least two attaching devices are provided to apply the elastic restoring force to one attaching object, respectively.

Hence, the attachment can be performed more reliably. In addition, each attaching device can be made small.

According to still a further aspect, the at least one attaching device may be attached to the attachment structure at a location different from the location where the elastic restoring force is applied to the attaching object when seen along the direction of the elastic restoring force.

According to this aspect, the location of attachment of the attaching device may be shifted from the location of action of the elastic restoring force. Thus, the configuration can be made compact in the direction of the elastic restoring force. Further, the attachment structure can be designed at the attachment location of the attaching device irrespective of the design required to support the attaching object. If the attachment structure has a substantially circular shape at the first side, an attachment location of the attaching device may be different in a circumferential direction of the attachment structure from the location where the elastic restoring force is applied to the attaching object.

According to still a further aspect, at least two attaching objects may share at least part of a common attaching device.

Thus, the configuration can be further simplified, the number of components may be reduced, and weight can be saved.

According to still a further aspect, a plurality of attaching objects may be provided along a circumferential direction of the attachment structure, preferably, to form a closed ring, preferably adjacent attaching objects along the circumferential direction share at least part of a common attaching device.

According thereto, the arrangement of the attaching objects can be made compact, while each attaching object can be efficiently cooled. It is to be noted that, at least on the first side, the attachment structure may extend along a circumferential direction.

Alternatively or additionally, the attachment structure may have a smooth surface at the first side, in particular, in an arc or ring shape.

Thus, stable contact between the attachment structure and the attaching object can be provided which fosters the cooling efficiency. A smooth surface is a surface having substantially no irregularities. The smooth surface may also have a flat shape.

According to still a further aspect, the at least one attaching object may be in face contact with the attachment structure.

Thereby, a relatively high amount of heat can be transferred to the attachment structured, and cooling of the attaching object can be improved.

According to still a further aspect, the attachment structure may be a casing accommodating the at least one attaching object therein.

Consequently, the attaching object can be protected from the environment such as a propulsion air flow or free air flow. In the context of the present invention, the casing need not be weakened by a hole in the region where the attaching object is attached, while the attaching object can still be reliably attached.

According to still a further aspect, the attachment structure, preferably an engine control unit housing, may be arranged downstream of a propulsion rotating unit and/or propulsion static unit of the electrically driven propulsion unit.

Thus, an energized propulsion air flow can be used for cooling. Further, weight balance can be increased. The propulsion rotating unit may be any unit which contributes in the generation of a propulsion air flow such as a fan or a compressor stage. The propulsion static unit may be any unit which interacts with the propulsion air flow such as static vanes.

According to still a further aspect, a propulsion air flow for generating a propulsion force may be configured to flow at a second side being opposite to the first side of the attachment structure, wherein, preferably, the attachment structure is exposed to a cooling air flow branched off from the propulsion air flow at the second side.

Hence, heat can be transferred via the attachment structure from the first side where the attaching object is provided to the second side where the propulsion air flow can be used for forced convection.

According to still a further aspect, the elastic element may be in face contact with the attaching object.

Thus, the elastic restoring force can be distributed, and damage to the attaching object can be prevented. Further, heat can be transferred via the elastic element.

According to still a further aspect, the attachment structure may have surface increasing portions, in particular fins and/or ribs, at a second side opposite to the first side.

Thus, the cooling performance can be further increased as a greater surface for heat transfer can be provided.

According to still a further aspect, the elastic element, preferably the entire at least one attaching device, may comprise a thermally conductive material, in particular, steel and/or titanium, may be preferably formed thereof.

Hence, heat can be transferred via the elastic element itself. Steel and/or titanium can ensure mechanical stability such that the attachment can be made reliable.

Another aspect provides an aerial vehicle comprising the electrically driven propulsion unit according to at least one of the preceding aspects, wherein the aerial vehicle is preferably of a VTOL type.

In such an aerial vehicle, the above mentioned effects can be achieved. In a VTOL aerial vehicle, considerable propulsion forces may occur such that high cooling rates are required. Further, when switching between different orientations of the propulsion unit, high mechanical loads may occur for which the above aspects are preferable.

In other words, the proposed attachment structure of the propulsion unit, engine, of the electric aerial vehicle is a part of the engine, more specifically an engine control unit housing to attach power modules. The engine control unit (ECU) housing is an approximately cylindrical item provided at the back of the engine. The outer surface of the housing forms the inner surface of the annular engine duct for the propulsion air flow. The propulsion air flow flows over the surface, hence it is used to cool the power electronics employed within the engine control unit. The power electronics used are in the form of power modules. The power modules are arranged in a circular pattern and are attached to the inner surface of the ECU housing, providing the shortest possible thermal path between the power module and the air used for cooling. The housing thickness is optimised to minimise the mass whilst fulfilling thermal (heat spreading) and structural requirements. The resulting thickness is too thin for attaching the power modules using the commonly used/state of the art screw solutions. This invention solves that problem by providing a means to attach power modules into the housing using spring-like fixations, that do not impose requirements on housing thickness as a normal screw would. That is, the thickness correlates in such a manner with the thermal resistance of the attachment structure, that the bigger the thickness the higher the thermal resistance is and vice versa. Also, the thickness correlates in a reverse manner with the rate of heat convection by the propulsion air flow such that the bigger the thickness, the smaller the heat convection rate is and vice versa. For example, the attachment structure (engine control unit housing) conventionally may have a thickness of 4 mm to accommodate a screw head. By means of the present invention, the thickness may be reduced to less than 4 mm, preferably less than 2 mm, for example, 1 mm. In this case, the thermal resistance of the attachment structure can be reduced up to 75%, wherefore the entire thermal resistance between an electric or electronic component and the propulsion air flow, to which the resistance of the attachment structure contributes with about 20%, can be reduced up to 15%. This increases the convection amount and the efficiency.

Furthermore, weight can be saved in two ways. On the one hand, by the smaller attachment structure itself weight can be saved. On the other hand, as the convection rate is increased, the fins and/or ribs can be reduced in size and mass to comply with a predetermined heat discharge rate such that the propulsion unit can be made compact.

The present invention will be now described in detail by making reference to the accompanying drawings.
Fig. 1 shows an aerial vehicle to which the electrically driven propulsion unit of the present invention is applied.
Fig. 2 shows a longitudinal sectional view of a propulsion unit.
Fig. 3 shows a cross section of the propulsion unit.
Fig. 4 shows a perspective view of the attachment region shown in Fig. 3
Fig. 5 shows a perspective view of an attaching device.
Fig. 6 shows alternatives for attaching the attaching device to the attachment structure.

In the drawings, a longitudinal axis of the aircraft is designated as x-axis. A transversal axis, which extends along the wing span is designated as y-axis, and a vertical axis, which forms an orthogonal right hand system with the x- and y-axis is designated as z-axis.

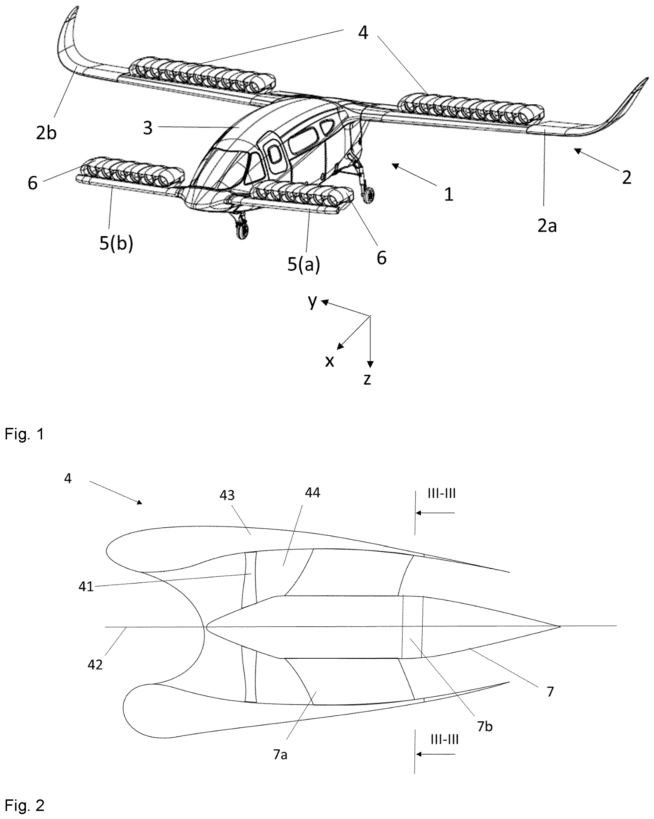

Fig. 1 shows an aircraft which is designated by reference numeral 1 in perspective view. The aircraft 1 comprises a wing 2. In particular, the aircraft 1 comprises a left wing 2a and a right wing 2b extending on both sides of the x-axis of a fuselage 3, respectively, along the y-axis of the aircraft 1.

On both of the left and right wings 2a and 2b, a plurality of propulsion units 4 are attached. The propulsion units 4 are attached to a rear portion, in particular a rear end portion such as a trailing edge, of the wings 2. The plurality of propulsion units 4 are aligned along the y-axis of the aircraft 1. In particular, the propulsion units 4 are arrayed along an arrangement direction which is aligned with the y-axis of the aircraft.

The propulsion units 4 are attached to be pivotable about a pivot axis parallel to the y-axis. In particular, the propulsion units 4 are pivotable between a substantially horizontal orientation (cruise flight mode shown in Fig. 1) and a substantially vertical orientation (take-off or hover flight mode). On the wings 2a and 2b, an array of nine propulsion units 4 is provided, respectively.

At least one actuator is provided for each propulsion unit 4 to set the orientation of the propulsion unit 4 with respect to the wing 2. It is to be noted that at least some of the propulsion units 4 of the array of propulsion units 4 may form an integral unit, which is actuated by at least one actuator. However, it is preferable that some, preferably all, propulsion units 4 may be pivoted individually and independently from the others. The propulsion units of each array are preferably pivoted synchronously, that is, there orientation with respect to the wing 2 or canard 5 may be the same.

In addition, the aircraft 1 comprises the canard 5. In particular, a left canard 5a and a right canard 5b are provided to both sides of the x-axis in front of the wings 2a and 2b. Propulsion units 6 are attached to a rear portion, in particular to a rear end portion such as a trailing edge of the canards 5. The propulsion units 6 are also attached to the canard 5 to be pivotable around an axis parallel to the y-axis. On the canards 5a and 5b, six propulsion units 6 are provided to form an array, respectively.

The propulsion units 6 may be different in configuration, in particular, in terms of size, drive type, and maximum thrust, from the propulsion units 4. Thus, they have different reference signs. The present invention may be applied to both of propulsion units 4 and 6. They are electrically driven, preferably, by a rotary electric machine such as an electric motor.

The aircraft 1 is of a vertical-take-off-and-landing type. The propulsion units 4 and/or 6 may thus be configured to pivot in an angle range of at least 90°, preferably 110°.

It is to be noted that the aerial vehicle 1 is symmetrical with respect to the wings 2a and 2b, the canards 5a and 5b, as well as the arrangement of the propulsion units 4 and 6.

Reference is made to Figs. 2 to 5, which show an exemplary electrically driven propulsion unit 4. However, the present invention may also apply to propulsion unit 6 attached to the canard 5. As can be taken therefrom, propulsion unit 4 is of a ducted fan type. It is preferable if the propulsion units 4 and/or 6 form a flight control surface, respectively, in particular, a secondary flight control surface such as a flap.

In particular, the propulsion unit 4 includes a propulsion rotating unit 41 (fan). The propulsion rotating unit 41 can generate a propulsion force (thrust force) by rotation about the rotation axis 42 driven by the electric motor. The rotation of the fan 41 sucks air along to form a propulsion air flow along a direction which is substantially parallel to the rotation axis 42. The rotation axis 42 is also a thrust axis which is preferably spaced apart from an attachment portion of the propulsion unit 4 at the wing. That is, the thrust axis preferably has a lever arm with respect to the pivot axis. In the orientation shown in Figs. 1 and 2, the thrust axis is aligned with the x-axis, that is, the propulsion unit 4 is in horizontal orientation. It is to be noted that in hover flight, the thrust axis may be aligned with the z-axis. By means of pivoting the propulsion unit 4, thrust vectoring is enabled.

The fan 41 is encompassed by a cowling 43. The cowling 43 forms, at its radially inner side, a duct 44, together with a radially outer side of a stator part 7. The stator part 7 is located substantially at the center of the propulsion unit 4 (coaxially with the thrust axis) and rotatably supports the fan 41. The stator part 7 is connected to the cowling 43 by static vanes 7a which are provided in regular intervals circumferentially about the thrust axis and form a propulsion static unit. It is to be noted that the cowling 43 may form the flight control surface at its outer side. That is, the cowling 43 can act such as to vary the lift generated by the wings 2 and/or the canards 5.

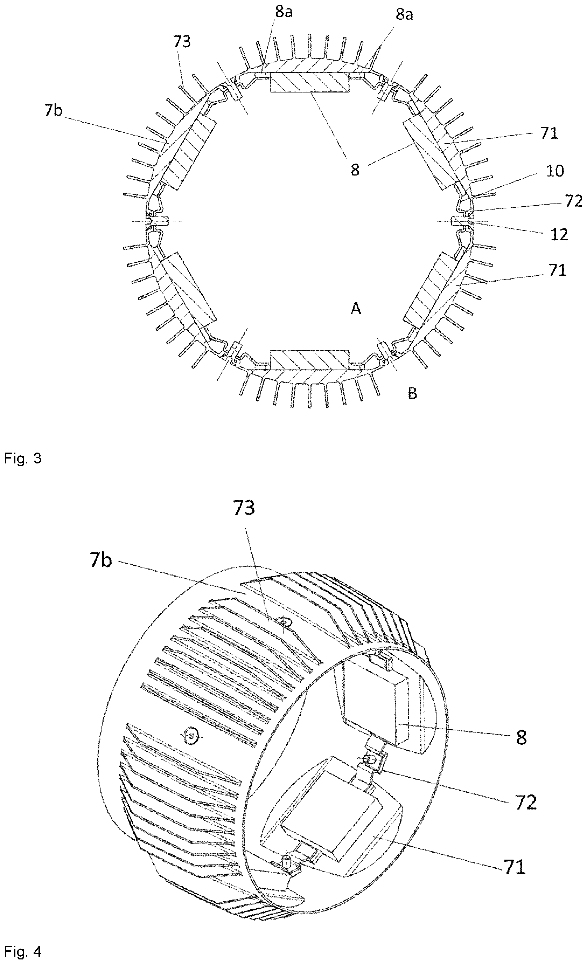

Fig. 3 is a cross section taken at line III-III in Fig. 2. It shows that the stator part 7 is formed in an overall ring shape, that is, has a completely revolving wall part along a circumferential direction. The stator part 7 accommodates at its radially inner side A (a first side) several electronic components such as power modules 8. The stator part 7 forms an attachment structure according to the invention in form of a casing (engine control unit housing 7b which is shown in Figs. 2 to 4) for the power modules 8 which are attaching objects, respectively. That is, the power modules 8 form an ECU (engine control unit) housed in the engine control unit housing 7b. It is to be noted that the engine control unit housing 7b is provided downstream of the propulsion rotating unit 41 and the propulsion static unit 7a, but can be provided downstream of only one of them. It is further provided downstream of the electric motor. It can be formed integrally with the stator part 7, in particular, in a monolithic manner or as a separate component. The power modules 8 are arranged at intervals along the circumferential direction, in particular, in equally spaced intervals. They are arranged at the same location along the thrust axis. In other words, they align in the circumferential direction.

Each power module 8 can comprise several electronic components such as transistors. The power modules forming an engine control unit (ECU) can control the operation of the aforementioned electric motor.

Each power module 8 has a substantially parallelepiped shape, in particular a square shape.

The stator part 7 has, along the circumferential direction, contact area portions 71 (six) which are equally spaced, and which may have the aforementioned thickness of 1 mm. It further has mounting portions 72 which are equally spaced and provided in the respective gaps between the contact area portions 71 along the circumferential direction. Each contact area portion 71 has a respective attaching object attached thereto. It has a flat contact surface at its radially inner side which is in face contact with a flat radially outer surface of the power module 8. As there are provided six power modules 8, at the radially inner side, the surface of the stator part 7 (engine control unit housing 7b) can be divided into six circumferential sectors, where the respective contact surface is a chord in the cross sectional view. A radially outer surface (at the second side B) of the contact area portion 71 has a circular arc shape and is provided with surface increasing portions 73. The surface increasing portions 73 have the shape of fins and extend parallel to the thrust axis, that is, to the propulsion air flow direction. They are spaced apart from each other along a direction perpendicular to the propulsion air flow direction (along substantially the circumferential direction)

The mounting portion 72 has flat surfaces at both of the radially inner and outer side. It is to be noted that the mounting portion has a reinforced portion which has a greater thickness than at least the contact area portion 71.

The electrically driven propulsion unit 4 further comprises an attaching device 9 at the first side A. The attaching device 9 has an elastic element 10. Furthermore, a screw 12 is provided for attaching the elastic element 10 to the stator part 7.

The elastic element 10 is a bent part, and is symmetrical with respect to a center plane which is perpendicular to the circumferential direction and is a plane including the thrust axis and the radial direction. The elastic element may be bent from a sheet metal.

The elastic element 10 includes a support part 11a, a folded part 11b, and a contact part 11c.

The support part 11a extends substantially parallel to the attachment structure at a certain location, that is, perpendicular to the radial direction and parallel to the inner surface of the mounting portion 72. It has a threaded hole penetrating along the radial direction (perpendicular to the mounting portion 72). The screw 12 is screwed into the threaded hole.

The folded part 11b is connected to the support part 11a (at both sides along the circumferential direction) and is folded such that it extends substantially perpendicular to the support part 11a and thus away from the attachment structure 7 (mounting portion 72). Then, in the folded part 11b, the elastic element 10 extends outward and towards the attachment structure. At an outward end portion, the contact part 11c is connected which extends further outward and away from the attachment structure 7 taken at the certain location. The contact part 11c is made such that it can establish face contact with the power modules 8.

The attaching device 9, that is, the elastic element 10 is attached to the mounting portion 72. The screw 12 is screwed into the threaded hole from the radially outer side (second side) of the attachment structure 7. A through hole is provided in the reinforced portion to have the screw inserted thereto. It is preferable if the screw 12 is accommodated in the attachment structure, for example, via a countersunk hole.

Each symmetric half (contact part) of the elastic element 10 is contacting a different power module 8 at a respective end portion of the respective power module 8. One power module 8 in turn is contacted at respective end portions thereof in the circumferential direction by two different elastic elements, respectively.

Function and effect of the present invention are now described.

As can be taken from Fig. 3, in particular, the power modules 8 have clamped portions 8a which protrude from respective end portions along the circumferential direction at the radially outer end. The clamped portions 8a have a reduced thickness compared to the rest of the power module 8.

With respective two adjacent attaching devices 9 attached to the respective mounting portions 72, the power module can be inserted along the propulsion air flow direction (parallel to the thrust axis) between the respective contact parts 11c and the attachment structure, in particular, the contact area portion 71. To this end, the contact part 11c can be bent slightly in a direction away from the attachment structure. Upon return to its natural state, the contact part 11c gets in contact with the clamped portion 8a, such that a residual elastic bending deformation remains in the elastic element.

Consequently, the attaching object is arranged between the elastic element 10 and the attachment structure along a radial direction. The elastic deformation causes an elastic restoring force acting upon the attaching object pressing the attaching object against the attachment structure. The elastic restoring force acts substantially along the radial direction which is perpendicular to the contact surface of the attachment structure.

Thus, the attaching object can be reliably secured to the attachment structure at two opposite end portions.

Further, there is no need to provide a hole in the contact area portion 71. Thus, said portion can be made rather thin which enhances cooling efficiency.

Further, the attaching object can be easily replaced as no screw needs to be unfastened. This is in particular advantageous if the attaching object is the power module. Since power modules can be combined with each other in various ways, it is possible to adapt to various specifications by replacing a power module.

As the elastic element 10 is bent, it is partially stretched at a side of the elastic element which is located against the bending direction from the neutral fiber. Further, the elastic element 10 extends at least partially with at least a component in a direction perpendicular to the direction of the elastic restoring force (perpendicular to the radial direction). Finally, the elastic element, in particular, the contact part 11c is deformed to be further away from the attachment structure. Any of these features ensures a compact configuration.

The attaching device 9 is attached to the mounting portion 72 which is at a location different from the location where the elastic restoring force is applied and where the attaching object is attached to the attachment structure 7, when seen along the direction along which the elastic restoring force acts. As best seen in Fig. 3, the elastic restoring force acts along the radial direction. When seen in this direction, the mounting portion 72 is shifted from the contact area portion 71 and the contact part 11b. In particular, the mounting portion 72 is shifted from the contact area portion along the circumferential direction. Thus, bending can be ensured, and the configuration can be made compact.

Adjacent attaching objects 8 share the support part 11a of the elastic element 10. Thus, they share at least part of a common attaching device and a common elastic element. Thus, loads can be commonly inserted into the attachment structure, and the number of components can be reduced. In this case, the common elastic element is integrally, in particular, monolithicly formed.

The attachment structure has a circumferential direction. In this regard, it is pointed out that the circumferential direction is not an exact circular direction. For example, at the first side, the circumferential direction extends parallel to each flat surface of the contact area portion 71 and the mounting portion 72. However, the various sectors approximate a circular direction. The radial direction means, in particular, the radial direction at each center of a sector.

The attaching objects 8 are arranged along the circumferential direction. Thus, the configuration can be made compact, and cooling efficiency can be enhanced.

Further, the attachment structure 8 has respective flat surfaces (contact surfaces). Thus, stable contact can be provided. This applies even more if the attaching object is in face contact with the contact surface.

The attaching object are attached to the attachment structure 7 at the location of the cross section III-III which is downstream of the propulsion rotating unit 41 along the propulsion air flow direction. Thus, the energized air flow can increase cooling efficiency, in particular, if the fins 73 are provided. The propulsion air flow flows at the radially outer side of the attachment structure (at the second side).

The elastic element 10 has the contact part 11c which is in face contact with the attaching object. Thus, the contact load can be well distributed and the attaching object can be spared.

Further, the elastic element 10 is formed of a material having thermal conductivity, in particular, a thermal coefficient of at least 15 W/(m K), more preferably of at least 20 W/(m K). Such material may comprise titanium or steel, alone or in combination.

Thus, it can be ensured that heat is carried to the attachment structure via the attaching device 9.

Modifications of the embodiment are now described.

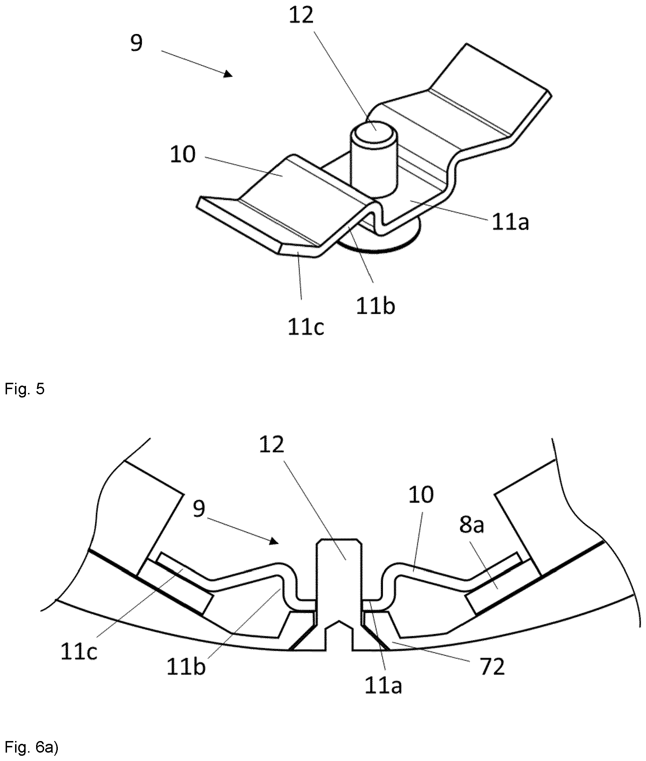

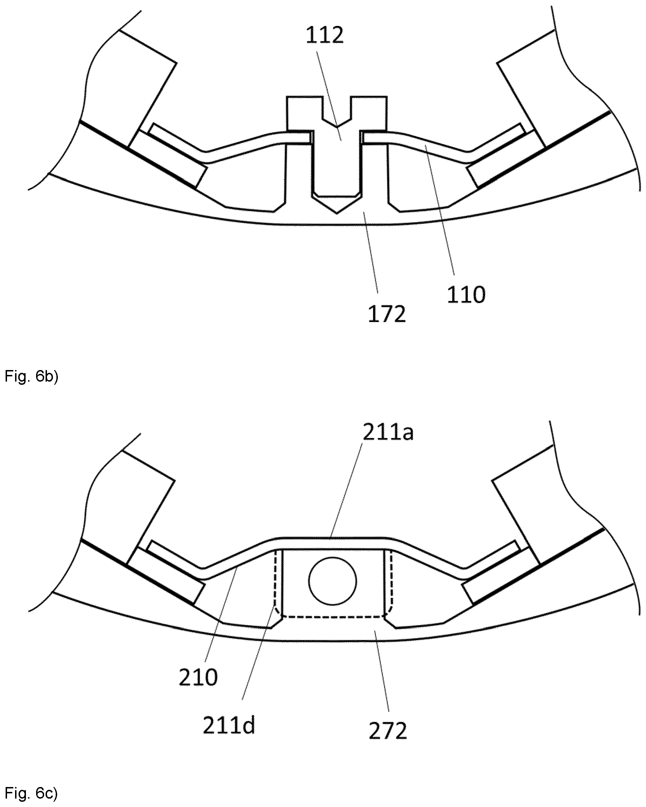

While Fig. 6a) shows the attachment variant of the embodiment where the attaching device is fastened by the screw 12 from the second side which is favourable in terms of assembly, Fig. 6b) shows a modification. Therein, the screw 112 is threaded into a threaded hole in the mounting portion 172 of the attachment structure while the elastic element 110 has a through hole. Thus, the screw does not impair the propulsion air flow.

Fig. 6c) shows a further modification. Therein, the attaching device (elastic element 210) is not secured by a screw inserted along the direction perpendicular to the attachment structure (along the radial direction) but along a direction perpendicular thereto, in the present case, parallel to the thrust axis. Thereto the elastic element 210 has a tab 211d provided at the support part 211a and bent such that it overlaps with the mounting portion 272 along the direction parallel to the thrust axis. A through hole is provided in the tab 211 d, and a threaded hole is provided in the mounting portion 272 such that a screw can be inserted along the direction parallel to the thrust axis.

Further, while in the embodiment, the elastic element is bent, it may also be compressed. For example, a compression spring may be provided as elastic element.

While a common elastic element is used for adjacent attaching objects, it is also possible to provide at least part of a common attaching device as a support part to which two separate elastic elements are provided at both sides.

Further, it is also possible that different attaching devices are used for each attaching object.

The attachment structure need not be the stator part 7 (casing). The attachment structure can also be a mounting plate. It is further not necessary that the attachment structure has a circumferential extension.

At the first side, instead of or in addition to the flat surfaces, arc shaped surfaces can be provided. Then, it is preferable if also the attaching object has a corresponding arc shape surface at the side facing the attachment structure. It is also possible that, a ring shaped surface is formed at the first side.

Even not shown, the propulsion air flow may be branched off such that a cooling air flow flows towards the radially inner side of the duct 44 and parallel to the thrust axis, and flows at the second side of the attachment structure.

Instead of fins, other surface increasing portions can be provided, for example, regular or irregular protrusions, ribs, and the like. It is preferable if the fins and/or ribs extend parallel to the thrust axis.

## Claims

1. An electrically driven propulsion unit (4, 6) of an aerial vehicle (1), comprising:
an attachment structure (7); and
at least one attaching object (8) to be attached to the attachment structure (7) at a first side (A) thereof, the at least one attaching object (8) being an electric or electronic component, **characterized by** further comprising
at least one attaching device (9) comprising an elastic element (10) which attaches the attaching object (8) by means of an elastic restoring force to the attachment structure (7).

2. The electrically driven propulsion unit (4, 6) according to claim 1, wherein the elastic element (10) is at least partially stretched to apply the elastic restoring force.

3. The electrically driven propulsion unit (4, 6) according to claim 1 or 2, wherein an elastic restoring force is applied to the attaching object (8) at two different locations, preferably at two opposite end portions of the attaching object (8).

4. The electrically driven propulsion unit (4, 6) according to claim 3, wherein at least two attaching devices (9) are provided to apply the elastic restoring force to one attaching object (8), respectively.

5. The electrically driven propulsion unit (4, 6) according to at least one of the preceding claims, wherein the at least one attaching device (9) is attached to the attachment structure (7) at a location different from the location where the elastic restoring force is applied to the attaching object (8) when seen along the direction of the elastic restoring force, in particular, at a location different in a circumferential direction of the attachment structure from the location where the elastic restoring force is applied to the attaching object.

6. The electrically driven propulsion unit (4, 6) according to at least one of the preceding claims, wherein at least two attaching objects (8) share at least part of a common attaching device (9).

7. The electrically driven propulsion unit (4, 6) according to at least one of the preceding claims, wherein a plurality of attaching objects (8) are provided along a circumferential direction of the attachment structure (7), preferably, to form a closed ring, preferably adjacent attaching objects (8) along the circumferential direction share at least part of a common attaching device (9), and/or
the attachment structure (7) has a smooth surface at the first side (A), in particular, in a flat, arc, or ring shape.

8. The electrically driven propulsion unit (4, 6) according to at least one of the preceding claims, wherein the at least one attaching object (8) is in face contact with the attachment structure (7).

9. The electrically driven propulsion unit (4, 6) according to at least one of the preceding claims, wherein the attachment structure (7) is a casing accommodating the at least one attaching object (8) therein.

10. The electrically driven propulsion unit (4, 6) according to at least one of the preceding claims, wherein the the attachment structure (7), preferably an engine control unit housing (7b), is arranged downstream of a propulsion rotating unit (41) and/or propulsion static unit of the electrically driven propulsion unit (4, 6).

11. The electrically driven propulsion unit (4, 6) according to at least one of the preceding claims, wherein a propulsion air flow for generating a propulsion force is configured to flow at a second side (B) being opposite to the first side (A) of the attachment structure (7), wherein, preferably, the attachment structure (7) is exposed to a cooling air flow branched off from the propulsion air flow at the second side (B).

12. The electrically driven propulsion unit (4, 6) according to at least one of the preceding claims, wherein the elastic element (10) is in face contact with the attaching object (8).

13. The electrically driven propulsion unit (4, 6) according to at least one of the preceding claims, wherein the attachment structure (7) has surface increasing portions, in particular fins (73) and/or ribs, at a second side (B) opposite to the first side (A).

14. The electrically driven propulsion unit (4, 6) according to at least one of the preceding claims, wherein the elastic element (10), preferably the entire at least one attaching device (9), comprises a thermally conductive material steel and/or titanium, is preferably formed thereof.

15. An aerial vehicle (1) comprising the electrically driven propulsion unit (4, 6) according to at least one of the preceding claims, wherein the aerial vehicle is preferably of a VTOL type.

## Amended claims

### Amended claims in accordance with Rule 137(2) EPC.

1. An electrically driven propulsion unit (4, 6) for an aerial vehicle (1), comprising:
an attachment structure (7); and
at least one attaching object (8) to be attached to the attachment structure (7) at a first side (A) thereof, the at least one attaching object (8) being an electric or electronic component, **characterized by** further comprising
at least one attaching device (9) comprising an elastic element (10) which attaches the attaching object (8) by means of an elastic restoring force to the attachment structure (7), wherein the elastic restoring force is provided by deformation of the elastic element such that the elastic element (10) presses the attaching object (8) against the attachment structure (7) due to its elastic deformation only, wherein the elastic element (10) is configured to provide the elastic restoring force in a state of being attached to the attachment structure (7).

2. The electrically driven propulsion unit (4, 6) according to claim 1, wherein the elastic element (10) is at least partially stretched to apply the elastic restoring force.

3. The electrically driven propulsion unit (4, 6) according to claim 1 or 2, wherein at least two attaching devices (9) are provided to apply the elastic restoring force to one attaching object (8) at two different locations, respectively, preferably at two opposite end portions of the attaching object (8).

4. The electrically driven propulsion unit (4, 6) according to at least one of the preceding claims, wherein the at least one attaching device (9) is attached to the attachment structure (7) at a location different from the location where the elastic restoring force is applied to press the attaching object (8) when seen along the direction of the elastic restoring force, in particular, at a location different in a circumferential direction of the attachment structure from the location where the elastic restoring force is applied to the attaching object.

5. The electrically driven propulsion unit (4, 6) according to at least one of the preceding claims, wherein at least two attaching objects (8) share at least part of a common attaching device (9).

6. The electrically driven propulsion unit (4, 6) according to at least one of the preceding claims, wherein a plurality of attaching objects (8) are provided along a circumferential direction of the attachment structure (7), preferably, to form a closed ring, preferably adjacent attaching objects (8) along the circumferential direction share at least part of a common attaching device (9), and/or the attachment structure (7) has a smooth surface at the first side (A), in particular, in a flat, arc, or ring shape.

7. The electrically driven propulsion unit (4, 6) according to at least one of the preceding claims, wherein the at least one attaching object (8) is in face contact with the attachment structure (7).

8. The electrically driven propulsion unit (4, 6) according to at least one of the preceding claims, wherein the attachment structure (7) is a casing accommodating the at least one attaching object (8) therein.

9. The electrically driven propulsion unit (4, 6) according to at least one of the preceding claims, wherein the the attachment structure (7), preferably an engine control unit housing (7b), is arranged downstream of a propulsion rotating unit (41) and/or propulsion static unit of the electrically driven propulsion unit (4, 6).

10. The electrically driven propulsion unit (4, 6) according to at least one of the preceding claims, wherein a propulsion air flow for generating a propulsion force is configured to flow at a second side (B) being opposite to the first side (A) of the attachment structure (7), wherein, preferably, the attachment structure (7) is exposed to a cooling air flow branched off from the propulsion air flow at the second side (B).

11. The electrically driven propulsion unit (4, 6) according to at least one of the preceding claims, wherein the elastic element (10) is in face contact with the attaching object (8).

12. The electrically driven propulsion unit (4, 6) according to at least one of the preceding claims, wherein the attachment structure (7) has surface increasing portions, in particular fins (73) and/or ribs, at a second side (B) opposite to the first side (A).

13. The electrically driven propulsion unit (4, 6) according to at least one of the preceding claims, wherein the elastic element (10), preferably the entire at least one attaching device (9), comprises a thermally conductive material steel and/or titanium, is preferably formed thereof.

14. An aerial vehicle (1) comprising the electrically driven propulsion unit (4, 6) according to at least one of the preceding claims, wherein the aerial vehicle is preferably of a VTOL ty
